# EUROPEAN PATENT APPLICATION

(11) **EP 4 641 804 A1**
(43) Date of publication of application: **29.10.2025**
(21) Application number: 23926040.9
(22) Date of filing: 23.11.2023
(51) Int. Cl.: H01M 50/40, H01M 10/0568

(54) **BATTERY, ELECTRONIC PRODUCT, AND VEHICLE**

(30) Priority: 03.03.2023 CN 202310234979
(71) Applicant: Honor Device Co., Ltd., Shenzhen, Guangdong 518040 (CN)
(72) Inventor: LI, Wenwen, Shenzhen, Guangdong 518040 (CN); WU, Xia, Shenzhen, Guangdong 518040 (CN); YU, Zhihao, Shenzhen, Guangdong 518040 (CN)
(74) Representative: Goddar, Heinz J.
(86) International application number: PCT/CN2023/133788
(87) International publication number: WO 2024/183346

(57) **Abstract**

Embodiments of this application provide a battery, an electronic product, and a vehicle, relating to the technical field of battery energy storage. This is to solve a problem of depletion of lithium ions and electrolytes in a lithium-ion battery. The battery includes: a housing, a separator, a positive electrode structure, a positive electrode additive, a negative electrode structure, and a negative electrode additive. The housing has an inner cavity. The separator is disposed in the housing and configured to divide the inner cavity of the housing into a first cavity and a second cavity. The positive electrode structure and the positive electrode additive are located in the first cavity. The negative electrode structure and the negative electrode additive are located in the second cavity. The separator is configured to allow active ions capable of migrating between the positive electrode structure and the negative electrode structure in the battery to pass through, and the separator is configured to limit at least part of the positive electrode additive from moving into the second cavity and limit at least part of the negative electrode additive from moving into the first cavity.

## Description

This application claims priority to Chinese Patent Application No. 202310234979.8, filed in China on March 03, 2023 and entitled "BATTERY, ELECTRONIC PRODUCT, AND VEHICLE", which is incorporated herein by reference in its entirety.

### TECHNICAL FIELD

This application relates to the technical field of battery energy storage, and in particular, to a battery, an electronic product, and a vehicle.

### BACKGROUND

Nowadays, there is a lithium-ion battery, and the lithium-ion battery may include a positive electrode, a negative electrode, and a separator. The positive electrode includes an active compound of lithium (such as, LiCoO2) and a positive electrolyte, and the negative electrode includes carbon with a special molecular structure and a negative electrolyte. During a charging and discharging process, part of components (for example, reducing substances) in the positive electrolyte pass through the separator and undergo reductive decomposition with the negative electrode, and part of components (for example, oxides) in the negative electrolyte pass through the separator and undergo oxidative decomposition with the positive electrode. This causes the depletion of lithium ions and electrolytes in the lithium-ion battery, thereby shortening a service life of the lithium battery.

### SUMMARY

In view of this, this application provides a battery, an electronic product, and a vehicle, to solve a problem of the depletion of lithium ions and electrolytes in the lithium-ion battery.

To achieve the foregoing objective, embodiments of this application provide the following technical solutions:

In a first aspect, this application provides a battery, including: a housing, a separator, a positive electrode structure, a positive electrode additive, a negative electrode structure, and a negative electrode additive. The housing has an inner cavity. The separator is disposed in the housing and configured to divide the inner cavity of the housing into a first cavity and a second cavity. The positive electrode structure and the positive electrode additive are located in the first cavity. The negative electrode structure and the negative electrode additive are located in the second cavity. The separator is configured to allow active ions capable of migrating between the positive electrode structure and the negative electrode structure in the battery to pass through, and the separator is configured to limit at least part of the positive electrode additive from moving into the second cavity and limit at least part of the negative electrode additive from moving into the first cavity.

Exemplarily, the positive electrode additive may contain components and active ions in a positive electrolyte, so that the positive electrode additive supplements the active ions and the positive electrolyte depleted in a positive electrode. The negative electrode additive may contain components and active ions in a negative electrolyte, so that the negative electrode additive can supplement the active ions (for example, lithium ions) and a negative electrolyte depleted in a negative electrode. In this way, even if the active ions (for example, lithium ions) are depleted, they are supplemented, so that a service life of the battery can be close to an expected service life. The separator reduces and prevents the positive electrode additive from flowing into the second cavity, thereby reducing or preventing the positive electrode additive from depleting the negative electrode. The separator also reduces and prevents the negative electrode additive from flowing into the first cavity, thereby reducing or preventing the negative electrode additive from depleting the positive electrode. In this way, in the case where the positive electrode additive can protect the positive electrode and the negative electrode additive can protect the negative electrode, the separator can further reduce the negative electrode additive from depleting the positive electrode (or positive electrode structure) and reduce the positive electrode additive from depleting the negative electrode (or negative electrode structure), thereby reducing byproducts, avoiding a swelling of the battery, and prolonging the service life of the battery.

In some embodiments, the separator includes: a sub-separator, a first adsorption layer, and a second adsorption layer. The sub-separator is configured to allow the active ions capable of migrating between the positive electrode structure and the negative electrode structure in the battery to pass through. The first adsorption layer is located on a side in the sub-separator close to the positive electrode. The first adsorption layer is configured to adsorb at least part of the positive electrode additive. The second adsorption layer is located on a side of the sub-separator close to the negative electrode. The second adsorption layer is configured to adsorb at least part of the negative electrode additive. In this way, the first adsorption layer can reduce or prevent the positive electrode additive from flowing into the second cavity through the separator. The second adsorption layer can reduce or prevent the negative electrode additive from flowing into the first cavity through the separator. Thereby, the depletion of the positive electrode and the negative electrode is reduced.

In some embodiments, at least one of materials of the first adsorption layer and the second adsorption layer is configured to include: at least one of a porous material, reduced graphene oxide, inorganic oxide, and organic cyclic macromolecule.

In some embodiments, the separator includes a permselective membrane for the active ions. In this way, the positive electrode additive moving into the second cavity and the negative electrode additive moving into the first cavity can be reduced, thereby reducing the depletion of the positive electrode and the negative electrode.

In some embodiments, the positive electrode structure includes a positive electrode plate and a positive electrode current collector provided in a stacked manner. The positive electrode plate is doped with a first adsorption material, and the first adsorption material is configured to adsorb the negative electrode additive moving from the second cavity into the first cavity. In this way, by using an adsorption capacity of the first adsorption material, the negative electrode additive in the first cavity is absorbed, thereby reducing or preventing the negative electrode additive in the first cavity from the depleting the positive electrode.

In some embodiments, the positive electrode structure includes a positive electrode plate and a positive electrode current collector provided in a stacked manner. The positive electrode structure further includes a third adsorption layer. The third adsorption layer is disposed at a side of the positive electrode plate close to or away from the positive electrode current collector. A material of the third adsorption layer includes the first adsorption material, and the third adsorption layer is configured to adsorb the negative electrode additive moving from the second cavity into the first cavity. In this way, by using the adsorption capacity of the first adsorption material, the third adsorption layer absorbs the negative electrode additive in the first cavity, thereby reducing or preventing the negative electrode additive in the first cavity from the depleting the positive electrode.

In some embodiments, the first adsorption material includes at least one of reduced graphene oxide, inorganic oxide, and organic cyclic macromolecule.

In some embodiments, the negative electrode structure includes a negative electrode plate and a negative electrode current collector provided in a stacked manner. The negative electrode plate is doped with a second adsorption material, and the second adsorption material is configured to adsorb the positive electrode additive moving from the first cavity into the second cavity. In this way, by using an adsorption capacity of the second adsorption material, the negative electrode plate can absorb the positive electrode additive in the second cavity, thereby reducing or preventing the positive electrode additive in the second cavity from depleting the negative electrode.

In some embodiments, the negative electrode structure includes a negative electrode plate and a negative electrode current collector provided in a stacked manner. The negative electrode structure further includes a fourth adsorption layer. The fourth adsorption layer is disposed at a side of the negative electrode plate close to or away from the negative electrode current collector. The fourth adsorption layer includes the second adsorption material, and the fourth adsorption layer is configured to adsorb the positive electrode additive moving from the first cavity into the second cavity. In this way, by using the adsorption capacity of the second adsorption material, the negative electrode plate can absorb the positive electrode additive in the second cavity, thereby reducing or preventing the positive electrode additive in the second cavity from depleting the negative electrode.

In some embodiments, the second adsorption material includes at least one of reduced graphene oxide, inorganic oxide, and organic cyclic macromolecule.

In some embodiments, the positive electrode additive includes at least one of dimethyl carbonate, propylene carbonate, diethyl carbonate, methyl ethyl carbonate, carboxylate, sultone, vinylene carbonate, fluorocarboxylate, nitriles, and lithium difluoro(oxalato)borate. The negative electrode additive includes at least one of ethylene carbonate, diethyl carbonate, methyl ethyl carbonate, propylene carbonate, vinyl sulfate, fluoroethylene carbonate, and lithium difluoro(oxalato)borate.

In some embodiments, the separator has a first surface and a second surface opposite to each other. The positive electrode plate has a plurality of first through holes, and a side of openings of the plurality of first through holes in the positive electrode plate is in contact with the first surface. The negative electrode plate has a plurality of second through holes, and a side of openings of the plurality of second through holes in the negative electrode plate is in contact with the second surface. The battery further includes a positive electrolyte and a negative electrolyte. At least part of the positive electrolyte is embedded into the plurality of first through holes to reduce the positive electrolyte in the first cavity, thereby reducing the first cavity. At least part of the negative electrolyte is embedded into the plurality of second through holes to reduce the negative electrolyte in the second cavity, thereby reducing the second cavity. In this way, in a case where the positive electrode plate is in contact with the separator, the negative electrode plate, and the separator, the positive electrolyte in the first through holes can directly flow onto the separator to wet the separator. The negative electrolyte in the second through holes can directly flow onto the separator to wet the separator. A wetted separator is convenient for the active ions (for example, lithium ions) to pass through.

In a second aspect, a battery is provided. The battery includes a housing, a separator, a positive electrode structure, a positive electrode additive, a negative electrode structure, and a negative electrode additive. The housing has an inner cavity. The separator is disposed in the housing and configured to divide the inner cavity of the housing into a first cavity and a second cavity. The positive electrode structure and the positive electrode additive are located in the first cavity. The negative electrode structure and the negative electrode additive are located in the second cavity.

The positive electrode structure includes a positive electrode plate and a positive electrode current collector provided in a stacked manner. The positive electrode plate is doped with a first adsorption material, and the first adsorption material is configured to adsorb the negative electrode additive moving from the second cavity into the first cavity.

In some embodiments, the positive electrode structure includes a positive electrode plate and a positive electrode current collector provided in a stacked manner. The positive electrode structure further includes a third adsorption layer. The third adsorption layer is disposed at a side of the positive electrode plate close to or away from the positive electrode current collector. A material of the third adsorption layer is the first adsorption material. The third adsorption layer is configured to adsorb the negative electrode additive moving from the second cavity into the first cavity.

In some embodiments, the negative electrode structure includes a negative electrode plate and a negative electrode current collector provided in a stacked manner. The negative electrode plate is doped with a second adsorption material, and the second adsorption material is configured to adsorb the positive electrode additive moving from the first cavity into the second cavity.

In some embodiments, the negative electrode structure includes a negative electrode plate and a negative electrode current collector provided in a stacked manner. The negative electrode structure further includes a fourth adsorption layer. The fourth adsorption layer is disposed at a side of the negative electrode plate close to or away from the negative electrode current collector. The fourth adsorption layer includes the second adsorption material. The fourth adsorption layer is configured to adsorb the positive electrode additive moving from the first cavity into the second cavity.

In some embodiments, the positive electrode structure includes a positive electrode plate and a positive electrode current collector provided in a stacked manner. The positive electrode plate is doped with a first adsorption material, and the first adsorption material is configured to adsorb the negative electrode additive moving from the second cavity into the first cavity. The negative electrode structure includes a negative electrode plate and a negative electrode current collector provided in a stacked manner. The negative electrode plate is doped with a second adsorption material, and the second adsorption material is configured to adsorb the positive electrode additive moving from the first cavity into the second cavity.

In some embodiments, the positive electrode structure includes a positive electrode plate and a positive electrode current collector provided in a stacked manner. The positive electrode plate is doped with a first adsorption material, and the first adsorption material is configured to adsorb the negative electrode additive moving from the second cavity into the first cavity. The negative electrode structure includes a negative electrode plate and a negative electrode current collector provided in a stacked manner. The negative electrode structure further includes a fourth adsorption layer. The fourth adsorption layer is disposed at a side of the negative electrode plate close to or away from the negative electrode current collector. The fourth adsorption layer includes the second adsorption material. The fourth adsorption layer is configured to adsorb the positive electrode additive moving from the first cavity into the second cavity.

In some embodiments, the positive electrode structure includes a positive electrode plate and a positive electrode current collector provided in a stacked manner. The positive electrode structure further includes a third adsorption layer. The third adsorption layer is disposed at a side of the positive electrode plate close to or away from the positive electrode current collector. A material of the third adsorption layer is the first adsorption material. The third adsorption layer is configured to adsorb the negative electrode additive moving from the second cavity into the first cavity. The negative electrode structure includes a negative electrode plate and a negative electrode current collector provided in a stacked manner. The negative electrode plate is doped with a second adsorption material, and the second adsorption material is configured to adsorb the positive electrode additive moving from the first cavity into the second cavity.

In some embodiments, the positive electrode structure includes a positive electrode plate and a positive electrode current collector provided in a stacked manner. The positive electrode structure further includes a third adsorption layer. The third adsorption layer is disposed at a side of the positive electrode plate close to or away from the positive electrode current collector. A material of the third adsorption layer is the first adsorption material. The third adsorption layer is configured to adsorb the negative electrode additive moving from the second cavity into the first cavity. The negative electrode structure includes a negative electrode plate and a negative electrode current collector provided in a stacked manner. The negative electrode structure further includes a fourth adsorption layer. The fourth adsorption layer is disposed at a side of the negative electrode plate close to or away from the negative electrode current collector. The fourth adsorption layer includes the second adsorption material. The fourth adsorption layer is configured to adsorb the positive electrode additive moving from the first cavity into the second cavity.

The battery provided in the second aspect includes at least one of the first adsorption material and the second adsorption material. Therefore, for the effects of the battery provided in the second aspect, reference may be made to the effects of the battery provided in the first aspect.

In a third aspect, an electronic product is provided. The electronic product includes: an electronic element and the battery described above. The battery supplies power to the electronic element. The electronic product includes the battery described above, so the electronic product has the same effects as the battery described above.

In a fourth aspect, a vehicle is provided. The vehicle includes a driving motor, an in-vehicle element, and the battery described above, and the battery supplies power to one of the driving motor and the in-vehicle element; and/or the vehicle includes the electronic product described above. The vehicle includes the battery described above, so the vehicle has the same effects as the battery described above.

### BRIEF DESCRIPTION OF DRAWINGS

To describe the technical solutions of this application more clearly, the following briefly introduces the accompanying drawings required for describing the embodiments of this application. Apparently, the accompanying drawings in the following description show merely those of embodiments of this application, and a person skilled in the art may still derive other drawings from these accompanying drawings. In addition, the accompanying drawings in the following description may be regarded as schematic diagrams, and are not a limitation on the actual sizes of products, the actual flow of methods, the actual timing of signals, etc. involved in the embodiments of this application.
FIG. 1A is a schematic structural diagram of a vehicle according to an embodiment of this application;
FIG. 1B is a schematic structural diagram of an electronic product according to an embodiment of this application;
FIG. 2 to FIG. 5 are schematic structural diagrams of a battery according to an embodiment of this application;
FIG. 6 and FIG. 7 are schematic structural diagrams of another battery according to an embodiment of this application; and
FIG. 8 is a schematic structural diagram of still another battery according to an embodiment of this application.

### DESCRIPTION OF EMBODIMENTS

The technical solutions in embodiments of this application will be clearly and completely described below with reference to the accompanying drawings. Apparently, the described embodiments are merely some rather than all of the embodiments of this application. All other embodiments obtained by persons skilled in the art based on embodiments provided in this application fall within the protection scope of this application.

Unless the context requires otherwise, throughout the specification and claims, the term "including" is interpreted as an open and inclusive meaning, that is, "including but not limited to". In the descriptions of this specification, the terms "an embodiment", "some embodiments", "an exemplary embodiment", "an example" or "some examples" are intended to indicate that specific characteristics, structures, materials, or features described associated with the embodiment or example are included in at least one embodiment or example of this application. Exemplary descriptions of the foregoing terms do not necessarily refer to the same embodiment or example. Besides, the specific features, structures, materials or characteristics may be included in proper manners in any one or more embodiments or examples.

The terms "first" and "second" are used merely for the purpose of description below, and shall not be construed as indicating or implying relative importance or implicitly specifying a quantity of indicated technical features. Therefore, a feature limited by "first" or "second" may explicitly or implicitly include one or more of the features. In the description of the embodiments of this application, "a plurality of" means two or more unless otherwise stated.

"At least one of A, B, and C" has the same meaning as "at least one of A, B, or C" and includes the following combinations of A, B, and C: only A, only B, only C, a combination of A and B, a combination of A and C, a combination of B and C, and a combination of A, B, and C.

"A and/or B" includes the following three combinations: only A, only B, and a combination of A and B.

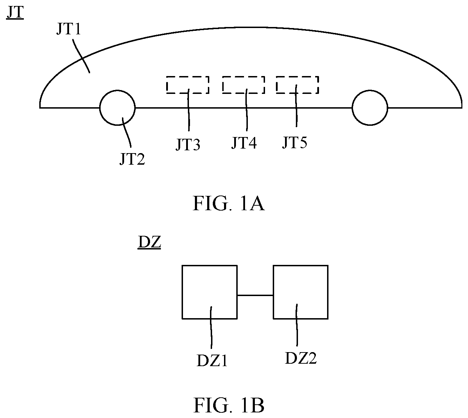

An embodiment of this application provides a vehicle. Referring to FIG. 1A, the vehicle JT may be an electric vehicle. The electric vehicle may include a power supply JT3, a driving motor JT4, a vehicle body JT1, and wheels JT2. The power supply JT3, the driving motor JT4, and the wheels JT2 are all installed on the vehicle body JT1. The power supply JT3 provides electric energy for the driving motor JT4. The driving motor JT4 converts the electric energy of the power supply into mechanical energy and drives the wheels JT2 to run. For example, the electric vehicle may be an electric car, an electric bicycle, a battery car, and a motorcycle. In some examples, the vehicle JT further includes an electronic product JT5. The electronic product is, for example, an in-vehicle element. For example, the in-vehicle element may be electrically connected to the power supply JT3, so that the in-vehicle element can work.

An embodiment of this application further provides an electronic product. Referring to FIG. 1B, the electronic product DZ may be a consumer electronic product. For example, the consumer electronic product may be a television, a videodisk player (VCD, SVCD, DVD), a video recorder, a camcorder, a radio, a radio cassette recorder, a music center, a record player, a mobile phone, a computer, or an electronic watch. The electronic product DZ may include an electronic element DZ1 and a power supply DZ2. The power supply DZ2 is configured to supply power to the electronic element DZ1, so that the electronic element DZ1 can work.

Both the vehicle JT and the electronic product DZ have power supplies (the power supply JT3 and the power supply DZ2). The power supplies may be batteries such as sodium-sulfur batteries and lithium-ion batteries.

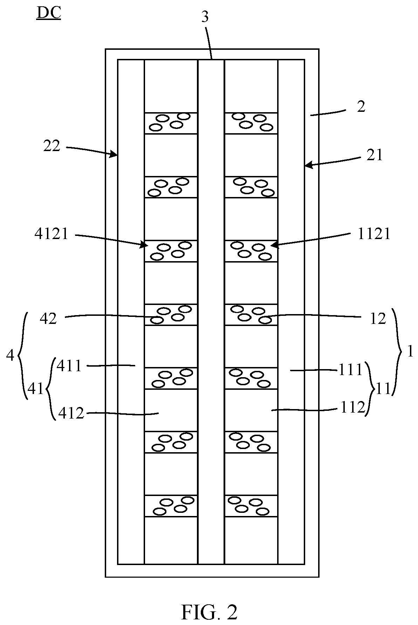

An embodiment of this application further provides a battery. The battery may serve as the power supply in the vehicle JT and the electronic product DZ. Referring to FIG. 2, FIG. 2 is a schematic structural diagram of a battery provided in this embodiment of this application. The battery DC may include a housing 2, a separator 3, a positive electrode structure 11, and a negative electrode structure 41.

The housing 2 has an inner cavity. The separator 3 is disposed in the inner cavity of the housing 2 and divides the inner cavity of the housing 2 into a first cavity 21 and a second cavity 22. In some examples, a material of the housing 2 may be a metal material such as steel and aluminum. The material of the housing 2 may also be a non-metal material such as PP and ABS. The material of the housing 2 may also be a composite material such as an aluminum-plastic film.

The positive electrode structure 11 is located in the first cavity 21. The positive electrode structure 11 includes a positive electrode current collector 111 and a positive electrode plate 112 provided in a stacked manner. The positive electrode current collector 111 may be a strip of metal foil such as copper foil, aluminum foil, nickel foil, or stainless steel foil. The positive electrode current collector 111 may also be a non-metal conductive film such as a carbon fiber film or a graphite film. In some examples, the battery DC further includes a positive electrolyte 12 located in the first cavity 21. The positive electrolyte 12 may be a non-aqueous electrolyte such as an organic electrolyte or an ionic electrolyte. In a possible implementation, a positive electrode 1 in the battery DC may include the positive electrode structure 11 and the positive electrolyte 12. In another possible implementation, the positive electrode 1 in the battery DC may include the positive electrode structure 11, but does not include the positive electrolyte 12. The following is a description in a case that the positive electrode 1 in the battery DC may include the positive electrode structure 11 and the positive electrolyte 12.

The negative electrode structure 41 is located in the second cavity 22. The negative electrode structure 41 includes a negative electrode current collector 411 and a negative electrode plate 412 provided in a stacked manner. The negative electrode current collector 411 may be a strip of metal foil such as copper foil, aluminum foil, nickel foil, or stainless steel foil. The negative electrode current collector 411 may also be a non-metal conductive film such as a carbon fiber film or a graphite film. The negative electrode current collector 411 and the positive electrode current collector 111 may be the same. The negative electrode current collector 411 and the positive electrode current collector 111 may also be different. In some examples, the battery DC further includes a negative electrolyte 42 located in the second cavity 22. The negative electrolyte 42 may be a non-aqueous electrolyte such as an organic electrolyte or an ionic electrolyte. The positive electrolyte 12 and the negative electrolyte 42 may be the same. The positive electrolyte 12 and the negative electrolyte 42 may also be different. In a possible implementation, a negative electrode 4 in the battery DC may include the negative electrode structure 41 and the negative electrolyte 42. In another possible implementation, the negative electrode 4 in the battery DC may include the negative electrode structure 41, but does not include the negative electrolyte 42. The following is a description in a case that the negative electrode 4 in the battery DC may include the negative electrode structure 41 and the negative electrolyte 42.

The separator 3 may be an electronically insulating and ion-conductive microporous film. The separator 3 can allow active ions capable of migrating between the positive electrode structure 11 and the negative electrode structure 41 in the battery DC to pass through and allow no electrons to pass through the separator 3 (i.e., prevent electrons from passing through the separator 3). The active ions may be metal ions with strong activity. For example, the metal ions may be lithium ions and sodium ions.

Exemplarily, the battery DC may be a metal-ion battery. In some examples, in a case where the active ions are lithium ions, the battery DC may be a lithium-ion battery. In this case, the positive electrode plate 112 may be lithium cobaltate, ternary, lithium iron phosphate, or the like. The negative electrode plate 412 may be carbon, graphite, or the like. A working principle of the metal-ion battery will be described below in an example of the lithium-ion battery.

The working principle of the lithium-ion battery is as follows. During discharging, lithium atoms on the negative electrode 4 are decomposed into electrons and lithium ions. The electrons reach the positive electrode 1 through an external circuit, and the lithium ions reach the positive electrode 1 through the separator 3. During charging, under an action of an external power supply, lithium atoms on the positive electrode 1 are decomposed into electrons and lithium ions. The lithium ions move to the negative electrode 4 through the separator 3, and the electrons move to the negative electrode 4 through an external circuit. The lithium ions and the electrons reaching the negative electrode 4 form the lithium atoms.

In some other examples, in a case where the active ions are sodium ions, the battery DC may be a sodium-ion battery. For a working principle of the sodium-ion battery, reference may be made to the related description of the working principle of the lithium-ion battery.

Exemplarily, the battery DC may be a metal battery. The negative electrode plate 412 of the metal battery may be a metal such as lithium and sodium. The negative electrode plate 412 of the metal battery may also be a semiconductor such as silicon. The positive electrode plate 112 of the metal battery may be a non-metallic element such as oxygen or sulfur. In some examples, lithium serves as the negative electrode plate 412, manganese dioxide serves as the positive electrode plate 112, and this metal battery may be referred to as a lithium metal battery. The active ions of the lithium metal battery are lithium ions. In some other examples, lithium serves as the negative electrode plate 412, oxygen serves as the positive electrode plate 112, and this metal battery may be referred to as a lithium-oxygen battery. The active ions of the lithium-oxygen battery are lithium ions.

In some implementations, the battery DC may also include a positive electrode additive and a negative electrode additive. The positive electrode additive is located in the first cavity 21. The negative electrode additive is located in the second cavity 22. The positive electrode additive may be a substance that is resistant to oxidation (for example, a reducing substance) and high potential. For example, the positive electrode additive may include at least one of dimethyl carbonate, propylene carbonate, diethyl carbonate, methyl ethyl carbonate, carboxylate, sultone, vinylene carbonate, fluorocarboxylate, nitriles, and lithium difluoro(oxalato)borate. The negative electrode additive may be a substance that is resistant to reduction (for example, an oxide) and low potential. For example, the negative electrode additive may include at least one of ethylene carbonate, diethyl carbonate, methyl ethyl carbonate, propylene carbonate, vinyl sulfate, fluoroethylene carbonate, and lithium difluoro(oxalato)borate. The positive electrode additive contains components and active ions (for example, lithium ions) in the positive electrolyte 12, so that the positive electrode additive supplements the active ions (for example, lithium ions) and the positive electrolyte 12 depleted in the positive electrode 1. The negative electrode additive contains components and active ions (for example, lithium ions) in the negative electrolyte 42, so that the negative electrode additive can supplement the active ions (for example, lithium ions) and the negative electrolyte 42 depleted in the negative electrode 4. In this way, even if the active ions (for example, lithium ions) are depleted, they are supplemented, so that the service life of the battery DC can be close to the expected service life.

Under a high potential (for example, greater than or equal to 4.0 V), first metal ions (for example, manganese ions or cobalt ions) are obtained in the first cavity 21 by ionization, and the first metal ions are dissolved into the positive electrolyte and move into the second cavity 22 through the separator 3. Under a low potential (for example, less than or equal to 1.5 V), the first metal ions undergo a reduction reaction with the negative electrode 4 to generate a first metal (for example, manganese or cobalt), and a generated first metal (for example, manganese or cobalt) may cause a short-circuit between the positive electrode 1 (or positive electrode structure) and the negative electrode 4 (or negative electrode structure) of the battery DC, resulting in a failure of the battery DC. In this embodiment, the positive electrode additive forms an electrolyte interface film (i.e., CEI film) on the positive electrode structure 11 (or positive electrode plate 112), and the CEI is resistant to oxidation and high potential and can protect the positive electrode structure 11. The negative electrode additive forms a passivation film (i.e., SEI film) on the negative electrode structure 41 (or negative electrode plate 412), and the passivation film is resistant to reduction and low potential and can protect the negative electrode structure 41. In this way, when the battery DC works under high potential and low potential, the CEI film formed on the positive electrode structure 11 can reduce the positive electrode 1 from being ionized into the first metal ions, and the passivation film on the negative electrode structure 41 can reduce the reduction reaction between the first metal ions and the negative electrode 4, so that the first metal generated is reduced, thereby avoiding the short-circuit between the positive electrode 1 (or positive electrode structure) and the negative electrode 4 (or negative electrode structure) in the battery DC. This further improves the service life and storage life of the battery DC. The first metal ions are not the active ions in the battery DC. The first metal ions may be a constituent element in the positive electrode 1 (for example, the positive electrode structure 11, for another example, the positive electrolyte) or the positive electrode additive, and may also be a constituent element in the negative electrode additive moving into the first cavity and in the negative electrolyte.

Based on the above implementation, the inventors of this application have further found that part of components (for example, reducing substances) in the positive electrode additive will still pass through the separator 3 and undergo a reduction reaction with the negative electrode 4 (or negative electrode structure 41), and part of components (for example, oxides) in the negative electrode additive will also pass through the separator 3 and undergo an oxidation reaction with the positive electrode 1 (or positive electrode structure 11). In this case, the active ions (for example, lithium ions) are still depleted. In addition, the generated byproduct will increase the impedance of the lithium-ion battery DC and may also cause the swelling of the lithium-ion battery DC.

In view of the problem that in the case where the positive electrode additive and the negative electrode additive are added to the battery DC, the active ions (for example, lithium ions) in the battery DC are depleted. In this embodiment of this application, the separator 3 is further configured to limit at least part (for example, all, for another example, a part) of the positive electrode additive from moving into the second cavity 22, to reduce or prevent the positive electrode additive from flowing into the second cavity 22 and reduce or prevent the reduction reaction between the positive electrode additive and the negative electrode 4, thereby reducing or preventing the positive electrode additive from depleting the negative electrode 4. The separator 3 is further configured to limit at least part (for example, all, for another example, a part) of the negative electrode additive from moving into the first cavity 21, to reduce or prevent the negative electrode additive from flowing into the first cavity 21 and reduce or prevent the oxidation reaction between the negative electrode additive and the positive electrode 1, thereby reducing or preventing the negative electrode additive from depleting the positive electrode 1. In this way, in the case where the positive electrode additive can protect the positive electrode 1 (or positive electrode structure) and the negative electrode additive can protect the negative electrode 4 (or negative electrode structure), the separator 3 can also reduce the negative electrode additive from depleting the positive electrode 1 (or positive electrode structure 11) and reduce the positive electrode additive from depleting the negative electrode 4 (or negative electrode structure 41).

In some embodiments, the separator 3 includes a permselective membrane for the active ions. This can reduce the positive electrode additive moving into the second cavity 22 and reduce the negative electrode additive moving into the first cavity 21, thereby reducing the negative electrode additive from depleting the positive electrode 1 (or positive electrode structure 11) and reducing the positive electrode additive from depleting the negative electrode 4 (or negative electrode structure 41). In some examples, the separator 3 may include a base membrane and the permselective membrane for the active ions provided in a stacked manner. In some other examples, the separator 3 is the permselective membrane for the active ions, and does not include the base membrane. The base membrane may be an organic membrane having a porous structure. The organic membrane is at least one of a polyethylene (PE) membrane and a polypropylene (PP) membrane. For example, the organic membrane may be a PP membrane, a PE membrane, and a PP membrane provided in a stacked manner.

In some examples, in the case where the active ions are lithium ions, the permselective membrane for the active ions is a permselective membrane for lithium ions. The permselective membrane for lithium ions may be a single-ion conductor (for example, lithium sulfonate polymer), a perfluorosulfonic acid membrane, a solid electrolyte (lithium lanthanum titanium oxide, lithium lanthanum zirconium oxide, lithium aluminum germanium phosphate, or lithium aluminum titanium phosphate), or the like. In some other examples, in the case where the active ions are sodium ions, the permselective membrane for the active ions is a permselective membrane for sodium ions.

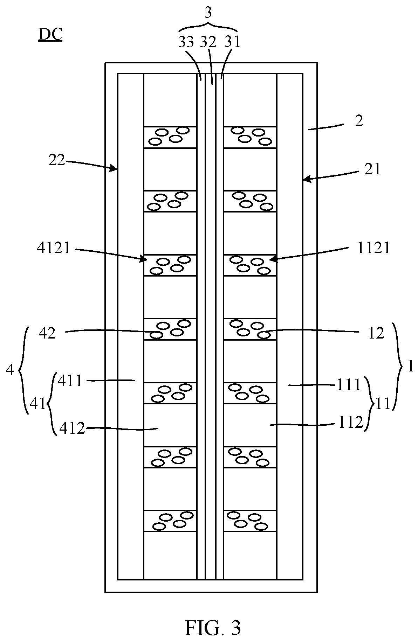

In some other embodiments, referring to FIG. 3, the separator 3 includes: a first adsorption layer 31, a sub-separator 32, and a second adsorption layer 33 provided in a stacked manner. The sub-separator 32 is configured to allow the active ions capable of migrating between the positive electrode structure 11 and the negative electrode structure 41 in the battery DC to pass through. The first adsorption layer 31 is located on a side in the sub-separator 32 close to the positive electrode 1, and the first adsorption layer 31 is configured to adsorb at least part (for example, all, for another example, a part) of the positive electrode additive, thereby reducing or preventing the positive electrode additive from flowing into the second cavity 22 through the separator 3. The second adsorption layer 33 is located on a side of the sub-separator 32 close to the negative electrode 4, and the second adsorption layer 33 is configured to adsorb at least part of the negative electrode additive, thereby reducing or preventing the negative electrode additive from flowing into the first cavity 21 through the separator 3. This reduces the negative electrode additive from depleting the positive electrode 1 (or positive electrode structure 11) and reduces the positive electrode additive from depleting the negative electrode 4 (or negative electrode structure 41).

In some examples, at least one of materials of the first adsorption layer 31 and the second adsorption layer 33 is configured to include: at least one of porous materials (for example, metal-organic framework materials, molecular sieves or zeolitic imidazolate framework structural materials), reduced graphene oxide, inorganic oxide (for example, manganese dioxide, titanium dioxide, vanadium pentoxide or copper oxide), and organic cyclic macromolecules (which may be a ring containing twelve or more members, for example, porphyrins).

In some examples, the sub-separator 32 may include a base membrane and the permselective membrane for the active ions provided in a stacked manner. In some other examples, the sub-separator 32 is the permselective membrane for the active ions, and does not include the base membrane. For the permselective membrane for the active ions, reference may be made to the related description of the permselective membrane for the active ions above.

In some embodiments, the positive electrode plate 112 is doped with a first adsorption material. For example, the first adsorption material is doped with the material of the positive electrode plate 112 such as lithium cobaltate, ternary or lithium iron phosphate mentioned above. By using the adsorption capacity of the first adsorption material, the first adsorption material in the positive electrode plate 112 can adsorb at least part (for example, a part, for another example, all) of the negative electrode additive moving from the second cavity 22 into the first cavity 21. This reduces the negative electrode additive in the first cavity 21 from the depleting the positive electrode 1 (or positive electrode structure 11). In some examples, the first adsorption material includes reduced graphene oxide, inorganic oxide (for example, manganese dioxide, titanium dioxide, vanadium pentoxide, or copper oxide), or organic cyclic macromolecule (for example, porphyrin). For the related description of the first adsorption material, reference may be made to the related description of the material of the first adsorption layer 31.

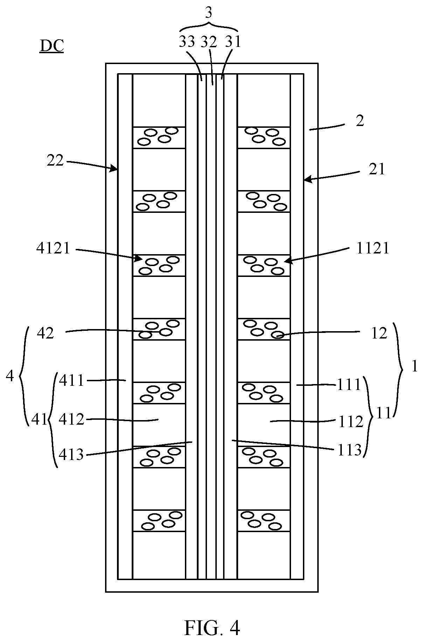

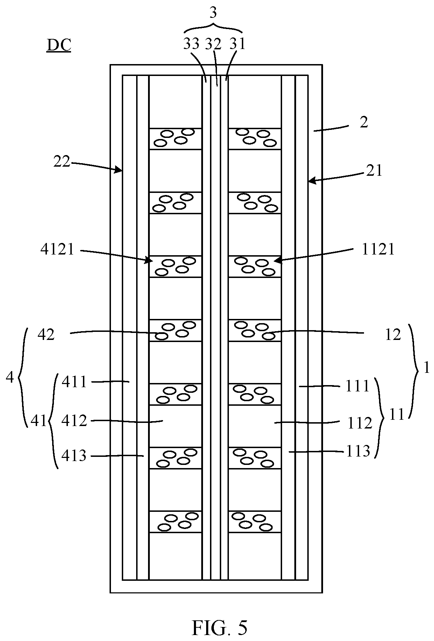

In some other embodiments, referring to FIG. 4 and FIG. 5, the positive electrode structure 11 further includes a third adsorption layer 113. The third adsorption layer 113 is disposed at a side of the positive electrode plate 112 close to or away from the positive electrode current collector 111. For example, referring to FIG. 4, the third adsorption layer 113 is disposed at a side of the positive electrode plate 112 away from the positive electrode current collector 111. That is, the third adsorption layer 113, the positive electrode plate 112, and the positive electrode current collector 111 are stacked sequentially. For another example, referring to FIG. 5, the third adsorption layer 113 is disposed at a side of the positive electrode plate 112 close to the positive electrode current collector 111. That is, the positive electrode plate 112, the third adsorption layer 113, and the positive electrode current collector 111 are stacked sequentially.

A material of the third adsorption layer 113 is the first adsorption material. By using the adsorption capacity of the first adsorption material, the third adsorption layer 113 can absorb at least part (for example, a part, for another example, all) of the negative electrode additive moving from the second cavity 22 into the first cavity 21, thereby reducing the negative electrode additive in the first cavity 21 from the depleting the positive electrode 1 (or positive electrode structure 11).

In some embodiments, a material of the negative electrode plate 412 includes the second adsorption material. For example, the second adsorption material may be doped with the material such as carbon and graphite mentioned above. By using the adsorption capacity of the second adsorption material, the second adsorption material in the negative electrode plate 412 can adsorb at least part (for example, a part, for another example, all) of the positive electrode additive moving from the first cavity 21 into the second cavity 22. This reduces the positive electrode additive in the second cavity 22 from depleting the negative electrode 4 (or negative electrode structure 41). In some examples, the second adsorption material includes reduced graphene oxide, inorganic oxide, and organic cyclic macromolecule. For the related description of the second adsorption material, reference may be made to the related description of the material of the first adsorption layer 31.

In some other embodiments, still referring to FIG. 4 and FIG. 5, the negative electrode structure 41 further includes a fourth adsorption layer 413. The fourth adsorption layer 413 is disposed at a side of the negative electrode plate 412 close to or away from the negative electrode current collector 411. For example, still referring to FIG. 4, the fourth adsorption layer 413 is disposed at a side of the negative electrode plate 412 away from the negative electrode current collector 411. That is, the fourth adsorption layer 413, the negative electrode plate 412, and the negative electrode current collector 411 are stacked sequentially. For another example, still referring to FIG. 5, the fourth adsorption layer 413 is disposed at a side of the negative electrode plate 412 close to the negative electrode current collector 411. That is, the negative electrode plate 412, the fourth adsorption layer 413, and the negative electrode current collector 411 are stacked sequentially.

The fourth adsorption layer 413 includes the second adsorption material. By using the adsorption capacity of the second adsorption material, the second adsorption layer 33 is configured to adsorb at least part (for example, a part, for another example, all) of the positive electrode additive moving from the first cavity 21 into the second cavity 22, thereby reducing or preventing the positive electrode additive in the second cavity 22 from depleting the negative electrode 4 (or negative electrode structure 41).

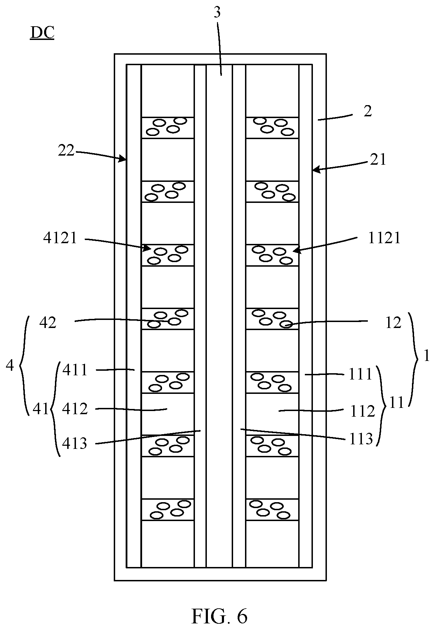

An embodiment of this application further provides another battery. Referring to FIG. 5 and FIG. 6, the battery DC includes: a housing 2, a separator 3, a positive electrode additive, a negative electrode additive, a positive electrode structure 11, and a negative electrode structure 41. For the descriptions of the structures, positions and effects of the housing 2, the positive electrode additive, the negative electrode additive, the positive electrode structure 11, and the negative electrode structure 41 in the battery DC in this embodiment of this application, reference may be made to the related description of the structures, positions and effects of the housing 2, the positive electrode additive, the negative electrode additive, the positive electrode structure 11, and the negative electrode structure 41 in the battery DC in the above embodiment of this application, and details will not be repeated. The separator 3 in the battery DC in this embodiment of this application is different from the separator 3 in the battery DC in the above embodiment of this application in that the separator 3 in the battery DC in this embodiment of this application is the base membrane and does not include the permselective membrane, or is the separator 3 provided with the first adsorption layer and the second adsorption layer. In this way, according to the battery DC in this embodiment of this application, by using the adsorption capacity of the first adsorption material, the positive electrode structure 11 adsorbs the negative electrode additive in the first cavity; and by using the adsorption capacity of the second adsorption material, the negative electrode structure 41 adsorbs the positive electrode additive in the second cavity, thereby reducing the depletion of the positive electrode 1 (or positive electrode structure 11) or the negative electrode 4 (negative electrode structure 41).

Examples of two battery DC structures are provided below.

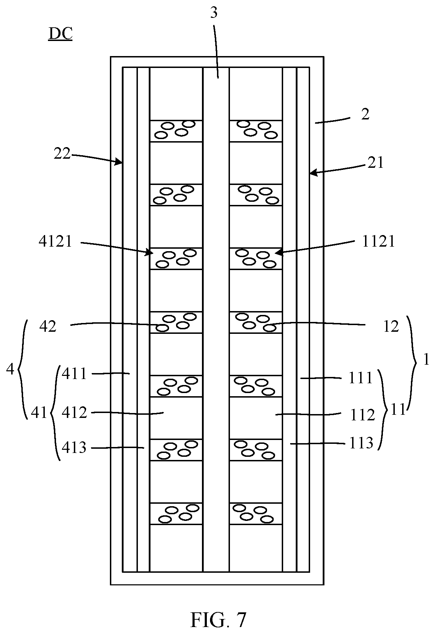

Example I: Referring to FIG. 2 to FIG. 8, the separator 3 has a first surface and a second surface opposite to each other. In some examples, in a case where the separator 3 includes the sub-separator 32, the first adsorption layer 31, and the second adsorption layer 33, the first surface is a surface of the first adsorption layer 31 away from the sub-separator 32, and the second surface is a surface of the second adsorption layer 33 away from the sub-separator 32.

The positive electrode plate 112 has a plurality of first through holes 1121, and at least a part of the positive electrolyte 12 is embedded into the plurality of first through holes 1121 (for example, all of the positive electrolyte 12 is embedded into the plurality of first through holes 1121, for another example, a part of the positive electrolyte 12 is embedded into the plurality of first through holes 1121, and the other part is located in the first cavity 21), so that the positive electrolyte 12 may exist in the positive electrode plate 112, thereby reducing the positive electrolyte 12 in the first cavity 21 and further reducing the first cavity 21. A side (for example, the left side shown in FIG. 2) of openings of the plurality of first through holes 1121 in the positive electrode plate 112 is in contact with the first surface. Then, in the case where they are in contact, the positive electrolyte 12 in the first through holes 1121 can directly flow onto the separator 3 to wet the separator 3. The wetted separator 3 is convenient for the active ions (for example, lithium ions) to pass through.

The negative electrode plate 412 has a plurality of second through holes 4121, and at least a part of the negative electrolyte 42 is embedded into the plurality of second through holes 4121 (for example, all of the negative electrolyte 42 is embedded into the plurality of second through holes 4121, for another example, a part of the negative electrolyte 42 is embedded into the plurality of second through holes 4121, and the other part is located in the second cavity 22), so that the negative electrolyte 42 may exist in the negative electrode plate 412, thereby reducing the negative electrolyte 42 in the second cavity 22 and further reducing the second cavity 22. A side (for example, the right side shown in FIG. 2) of openings of the plurality of second through holes 4121 in the negative electrode plate 412 is in contact with the second surface. Then, in the case where they are in contact, the negative electrolyte 42 in the second through holes 4121 can directly flow onto the separator 3 to wet the separator 3. A wetted separator 3 is convenient for the active ions (for example, lithium ions) to pass through.

Example II: The positive electrolyte 12 is located in the first cavity 21, and the positive electrode structure 11 is soaked in the positive electrolyte 12. That is, the positive electrode structure 11 is not in contact with the separator 3. The negative electrolyte 42 is located in the second cavity 22, and the negative electrode structure 41 is soaked in the negative electrolyte 42. That is, the negative electrode structure 41 is not in contact with the separator 3.

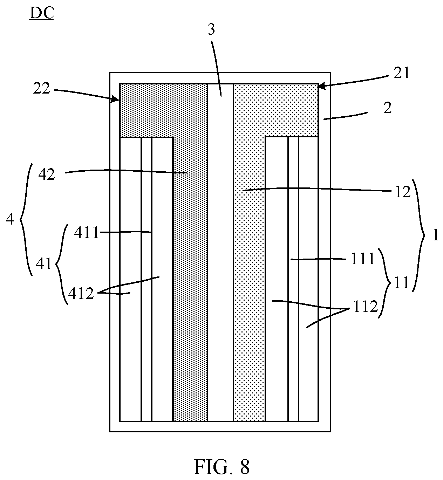

In some examples, referring to FIG. 2 to FIG. 7, for example, there may be one negative electrode plate 412. Referring to FIG. 8, there may also be two negative electrode plates 412. For example, the two negative electrode plates 412 are respectively disposed at two sides of the negative electrode current collector 411. In some examples, referring to FIG. 2 to FIG. 7, there may be one positive electrode plate 112. Referring to FIG. 8, there may also be two positive electrode plates 112. For example, the two positive electrode plates 112 are respectively disposed at two sides of the positive electrode current collector 111.

Several embodiments of the battery DC of this application as the lithium-ion battery will be provided below.

### Embodiment I:

The positive electrode current collector 111 is coated with a positive electrode slurry of lithium cobaltate, and after drying and cold pressing, the positive electrode structure 11, with the positive electrode plate 112 on the surface of the positive electrode current collector 111, is obtained. The negative electrode current collector 411 is coated with a negative electrode slurry of graphite, and after drying and cold pressing, the negative electrode structure 41, with the negative electrode plate 412 on the negative electrode current collector 411, is obtained.

The positive electrode structure 11, the positive electrolyte 12, the separator 3 with the first adsorption layer 31 and the second adsorption layer 33 made of metal-organic framework materials, the negative electrode structure 41, and the negative electrolyte 42 are hermetically assembled in the housing 2 to form the battery DC. The positive electrolyte 12 and the negative electrolyte 42 have the same composition.

### Embodiment II:

Embodiment II is different from Embodiment I in that a material of the positive electrode slurry may be sulfur, and a material of the negative electrode slurry may be lithium. The materials of the first adsorption layer 31 and the second adsorption layer 33 in the separator 3 may both be manganese dioxide.

### Embodiment III:

Embodiment III is different from Embodiment I in that the separator 3 is the separator 3 of the permselective membrane for lithium ions (the material is lithium aluminum titanium phosphate).

### Embodiment IV:

Embodiment IV is different from Embodiment I in that the material of the negative electrode slurry may be lithium. The separator 3 is the separator 3 of the permselective membrane for lithium ions (the material is lithium lanthanum zirconium oxide).

### Embodiment V:

Embodiment V is different from Embodiment I in that the separator 3 is the separator 3 of the permselective membrane for lithium ions (the material is a single-ion conductor, and the single-ion conductor is, for example, lithium sulfonate polymer).

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery, comprising:
a housing, having an inner cavity;
a separator, disposed in the housing and configured to divide the inner cavity of the housing into a first cavity and a second cavity;
a positive electrode structure and a positive electrode additive, located in the first cavity; and
a negative electrode structure and a negative electrode additive, located in the second cavity,
wherein the separator is configured to allow active ions capable of migrating between the positive electrode structure and the negative electrode structure in the battery to pass through, and the separator is configured to limit at least part of the positive electrode additive from moving into the second cavity and limit at least part of the negative electrode additive from moving into the first cavity.

2. The battery according to claim 1, wherein the separator comprises:
a sub-separator, configured to allow the active ions capable of migrating between the positive electrode structure and the negative electrode structure in the battery to pass through;
a first adsorption layer, located on a side in the sub-separator close to a positive electrode, wherein the first adsorption layer is configured to adsorb at least part of the positive electrode additive; and
a second adsorption layer, located on a side of the sub-separator close to a negative electrode, wherein the second adsorption layer is configured to adsorb at least part of the negative electrode additive.

3. The battery according to claim 2, wherein
at least one of materials of the first adsorption layer and the second adsorption layer is configured to comprise:
at least one of a porous material, reduced graphene oxide, inorganic oxide, and organic cyclic macromolecule.

4. The battery according to any one of claims 1 to 3, wherein
the separator comprises a permselective membrane for the active ions.

5. The battery according to any one of claims 1 to 4, wherein the positive electrode structure comprises a positive electrode plate and a positive electrode current collector provided in a stacked manner,
wherein the positive electrode plate is doped with a first adsorption material, and the first adsorption material is configured to adsorb at least part of the negative electrode additive;
or
the positive electrode structure further comprises a third adsorption layer; the third adsorption layer is disposed at a side of the positive electrode plate close to or away from the positive electrode current collector; and a material of the third adsorption layer comprises the first adsorption material, and the third adsorption layer is configured to adsorb at least part of the negative electrode additive.

6. The battery according to claim 5, wherein
the first adsorption material comprises at least one of reduced graphene oxide, inorganic oxide, and organic cyclic macromolecule.

7. The battery according to any one of claims 1 to 6, wherein
the negative electrode structure comprises a negative electrode plate and a negative electrode current collector provided in a stacked manner,
wherein the negative electrode plate is doped with a second adsorption material, and the second adsorption material is configured to adsorb at least part of the positive electrode additive;
or
the negative electrode structure further comprises a fourth adsorption layer, the fourth adsorption layer is disposed at a side of the negative electrode plate close to or away from the negative electrode current collector; and the fourth adsorption layer comprises the second adsorption material, and the fourth adsorption layer is configured to adsorb at least part of the positive electrode additive.

8. The battery according to claim 7, wherein
the second adsorption material comprises at least one of reduced graphene oxide, inorganic oxide, and organic cyclic macromolecule.

9. The battery according to any one of claims 1 to 8, wherein
the positive electrode additive comprises at least one of dimethyl carbonate, propylene carbonate, diethyl carbonate, methyl ethyl carbonate, carboxylate, sultone, vinylene carbonate, fluorocarboxylate, nitriles, and lithium difluoro(oxalato)borate; and
the negative electrode additive comprises at least one of ethylene carbonate, diethyl carbonate, methyl ethyl carbonate, propylene carbonate, vinyl sulfate, fluoroethylene carbonate, and lithium difluoro(oxalato)borate.

10. A battery, comprising:
a housing, having an inner cavity;
a separator, disposed in the housing and configured to divide the inner cavity of the housing into a first cavity and a second cavity;
a positive electrode structure and a positive electrode additive, located in the first cavity; and
a negative electrode structure and a negative electrode additive, located in the second cavity,
wherein the positive electrode structure comprises a positive electrode plate and a positive electrode current collector provided in a stacked manner, wherein the positive electrode plate is doped with a first adsorption material, and the first adsorption material is configured to adsorb at least part of the negative electrode additive; or the positive electrode structure further comprises a third adsorption layer, the third adsorption layer is disposed at a side of the positive electrode plate close to or away from the positive electrode current collector, a material of the third adsorption layer is the first adsorption material, and the third adsorption layer is configured to adsorb at least part of the negative electrode additive;
and/or
the negative electrode structure comprises a negative electrode plate and a negative electrode current collector provided in a stacked manner, wherein the negative electrode plate is doped with a second adsorption material, and the second adsorption material is configured to adsorb at least part of the positive electrode additive; or the negative electrode structure further comprises a fourth adsorption layer, the fourth adsorption layer is disposed at a side of the negative electrode plate close to or away from the negative electrode current collector, the fourth adsorption layer comprises the second adsorption material, and the fourth adsorption layer is configured to adsorb at least part of the positive electrode additive.

11. An electronic product, comprising:
an electronic element; and
the battery according to any one of claims 1 to 10, wherein the battery supplies power to the electronic element.

12. A vehicle, comprising:
a driving motor, an in-vehicle element, and the battery according to any one of claims 1 to 10, wherein the battery supplies power to at least one of the driving motor and the in-vehicle element;
and/or
the electronic product according to claim 11.
